# FASCICULE DE BREVET EUROPEEN

(11) **EP 1 041 323 B1**
(45) Date de publication et mention de la délivrance du brevet: **11.08.2004**
(21) Numéro de dépôt: 00400827.2
(22) Date de dépôt: 24.03.2000
(51) Int. Cl.: F16K 3/24, F16K 3/26

(54) **Vanne à clapet perfectionné à joint en élastomère**
Verbessertes Ventil mit Elastomerdichtung
Improved valve with elastomer seal

(30) Priorité: 02.04.1999 FR 9904186
(43) Date de publication de la demande: 04.10.2000
(73) Titulaire: DEFONTAINE, 85530 La Bruffière (FR)
(72) Inventeur: Bonnefous, Jean, 44400 Le Chatelier (FR); Maraud, Bruno, 44115 Basse Goulaine (FR)
(74) Mandataire: Rémont, Claude

(56) Documents cités:
- DE-A- 2 818 787
- GB-A- 247 589
- US-A- 2 130 614
- US-A- 2 661 182
- US-A- 3 828 815
- US-A- 4 373 545

## Description

La présente invention concerne une vanne à clapet perfectionnée à joint en élastomère, destinée notamment aux industries agro-alimentaires et sanitaires.

Les vannes destinées aux industries ci-dessus doivent être conçues de façon à éviter tout risque de pollution du liquide véhiculé par ces vannes, par des bactéries susceptibles de se développer à l'intérieur de ces vannes.

On connaît des vannes à clapet comportant un clapet en forme de piston mobile dans un siège cylindrique, ce clapet étant solidaire d'une tige de commande s'étendant dans l'axe du siège cylindrique, le pourtour du clapet portant un joint en élastomère réalisant l'étanchéité entre ce clapet et le siège cylindrique.

Dans ce type de vanne, le joint torique en élastomère est monté en force dans une gorge de section trapézoïdale réalisée dans le clapet. Cette disposition présente de nombreux inconvénients.

Parmi ces inconvénients, le plus important est que le produit véhiculé par la vanne risque de se loger entre la gorge et le joint, ce qui peut favoriser le développement de bactéries.

Par ailleurs, un tel développement de bactéries risque également de se produire à l'arrière du joint en cas d'avarie de ce dernier (mécanique, chimique, thermique ou autre).

Le but de la présente invention est de créer une vanne à clapet ne présentant pas les inconvénients ci-dessus et apportant en outre d'autres avantages.

L'invention vise ainsi une vanne à clapet comportant un clapet en forme de piston mobile dans un siège cylindrique, ce clapet étant solidaire d'une tige de commande s'étendant dans l'axe du siège cylindrique, le pourtour du clapet portant un joint torique en élastomère réalisant l'étanchéité entre ce clapet et le siège cylindrique.

Suivant l'invention, cette vanne est caractérisée en ce que le clapet comprend deux éléments de clapet fixés axialement l'un à l'autre par des moyens de serrage, chacun de ces deux éléments comportant une gorge annulaire de section sensiblement en forme d'arc de cercle ouverte vers la gorge portée par l'autre élément, le joint torique en élastomère étant logé entre les deux gorges annulaires et serré entre celles-ci par lesdits moyens de serrage.

Le joint torique, positionné entre les deux gorges annulaires, se déforme lors du rapprochement des deux éléments de clapet et, en s'écrasant, prend une forme complémentaire de la forme de ces gorges.

Ainsi, lors du serrage de deux éléments de clapet, le joint torique remplit complètement les deux gorges en regard. Par ailleurs, le joint peut se déformer radialement vers l'intérieur et vers l'extérieur par rapport à ces gorges.

Le risque de pénétration du produit véhiculé, entre le joint et le clapet, est éliminé.

De ce fait, en ne laissant aucun espace vide entre les surfaces respectives du joint torique et des gorges annulaires, conférant ainsi une étanchéité parfaite entre ce joint et les dites gorges, on évite tout risque de développement de bactéries ; de plus, l'étanchéité obtenue entre le clapet et le siège est améliorée.

Selon une version avantageuse de l'invention, après montage du joint et serrage des deux éléments de clapet, l'un vers l'autre, il subsiste un espace entre les deux surfaces en regard des deux éléments de clapet, dans lequel le joint peut se déformer.

De préférence, les deux éléments de clapet sont fixés axialement l'un à l'autre par une tige filetée portée par l'un des éléments, vissée dans un taraudage réalisé dans l'autre élément.

De préférence également, les deux éléments de clapet sont suffisamment serrés l'un vers l'autre pour que le joint se déforme pour faire saillie vers l'espace vide et vers l'extérieur de la périphérie des deux éléments de clapet pour pouvoir s'appliquer de façon étanche contre le siège cylindrique.

Selon une version avantageuse de l'invention, les bords de liaison entre chaque gorge annulaire et la surface adjacente de l'élément de clapet a une forme sensiblement arrondie.

Ainsi, lors du serrage des deux éléments de clapet, le joint en se déformant va s'écraser en assurant une étanchéité parfaite non seulement au niveau de chacune des gorges mais également au niveau des bords de liaison entre chaque gorge annulaire et la surface adjacente de l'élément de clapet correspondant.

On peut ainsi régler, grâce au serrage, la pression d'appui du joint contre le siège cylindrique afin de réaliser les conditions optimales d'étanchéité, de frottement du joint sur le siège, de facilité de manoeuvre et d'usure réduite du joint.

Selon une version préférée de l'invention, l'élément de clapet opposé à celui portant la tige de commande, porte une tige creuse dont l'intérieur communique avec l'espace vide situé entre les deux surfaces en regard des deux éléments de clapet, par au moins une ouverture.

Ainsi, en cas d'avarie du joint ou de fuite, le produit véhiculé par la vanne, peut pénétrer dans l'espace compris entre les deux éléments de clapet, puis dans l'intérieur de la tige creuse et être ainsi évacué à l'extérieur.

Aucun développement de bactéries ne risque ainsi de se produire à l'arrière du joint en cas de fuite.

D'autres particularités et avantages de l'invention apparaîtront encore dans la description ci-après.

Aux dessins annexés donnés à titre d'exemple non limitatifs :
- la figure 1 est une vue en coupe axiale d'une vanne à clapet selon l'invention ;
- la figure 2 est une vue en coupe à échelle agrandie du clapet avant serrage du joint torique ;
- la figure 3 est une vue analogue à la figure 2, après serrage du joint torique ;
- la figure 4 est une vue analogue à la figure 1, montrant une vanne à double clapet, l'un de ces clapets étant conforme à l'invention.
- la figure 5 est une vue analogue à la figure 4, montrant une vanne à double clapet composée de trois éléments de clapet, les deux clapets étant conformes à l'invention.
- la figure 6 est une vue partielle agrandie d'un détail de la figure 2 montrant un autre mode de réalisation de l'invention, le joint n'étant pas représenté pour la clarté de la figure.
- la figure 7 est une vue semblable à la figure 6, le joint étant serré par les deux éléments de clapet.

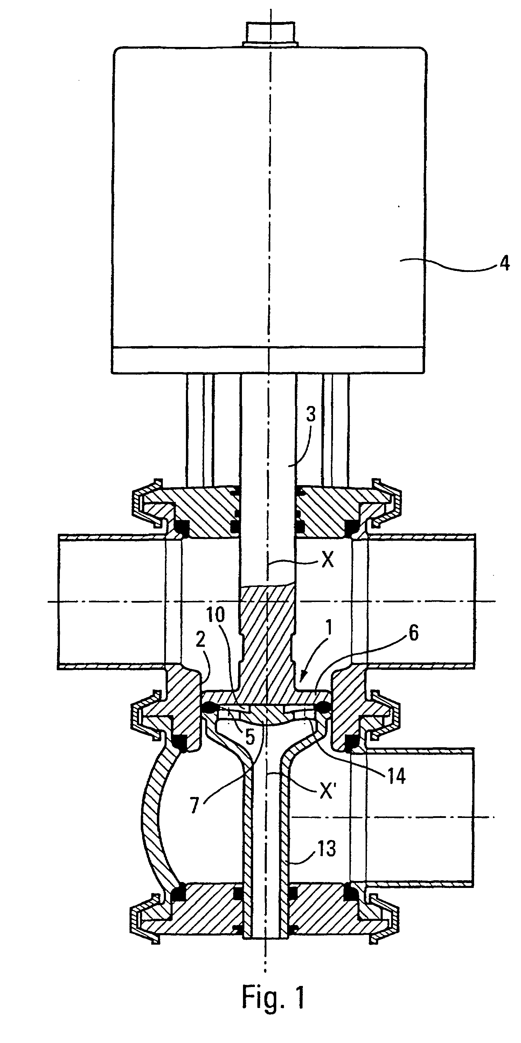

Dans la réalisation de la figure 1, la vanne à clapet comporte un clapet 1 en forme de piston mobile dans un siège cylindrique 2.

Ce clapet 1 est solidaire d'une tige de commande 3 s'étendant dans l'axe X-X' du siège cylindrique 2.

Cette tige 3 est actionnée par un actionneur 4.

Le pourtour du clapet 1 porte un joint torique 5 en élastomère réalisant l'étanchéité entre ce clapet 1 et le siège cylindrique 2.

Conformément à l'invention, le clapet 1 comprend deux éléments de clapet 6, 7 fixés axialement l'un à l'autre par des moyens de serrage.

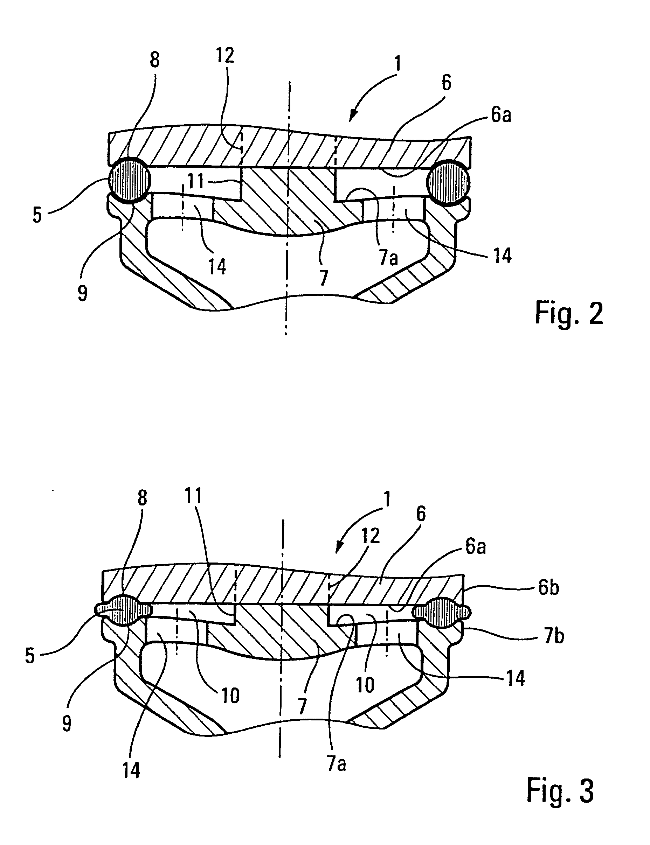

Chacun de ces deux éléments 6, 7 comporte (voir figure 2, 3) une gorge annulaire 8, 9 de section en forme d'arc de cercle ouverte vers la gorge 8, 9 portée par l'autre élément.

Le joint torique en élastomère 5 est logé entre les deux gorges annulaires 8, 9 et serré entre celles-ci par les moyens de serrage.

Le diamètre du joint torique 5 est choisi en fonction des dimensions des deux gorges annulaires 8, 9 pour que le joint torique 5, après serrage des deux éléments de clapet 6, 7, remplisse complètement le volume compris entre ces deux gorges annulaires 8, 9.

On voit sur la figure 3, qu'après montage du joint 5 et serrage des deux éléments de clapet 6, 7, l'un vers l'autre, il subsiste un espace 10 entre les deux surfaces 6a, 7a en regard des deux éléments de clapet 6, 7 vers lequel le joint torique 5 peut se déformer.

Dans l'exemple représenté, les deux éléments de clapet 6, 7 sont fixés axialement l'un à l'autre par une tige filetée 11 portée par l'élément 7 vissée dans un taraudage 12 réalisé dans l'autre élément 6.

Dans la position représentée sur la figure 3, les deux éléments de clapet 6, 7 sont suffisamment serrés l'un vers l'autre pour que le joint torique 5 se déforme pour faire saillie vers l'espace vide 10 et vers l'extérieur de la périphérie 6b, 7b des deux éléments de clapet 6, 7 pour pouvoir s'appliquer de façon étanche contre le siège cylindrique 2.

On voit également sur la figure 1 que l'élément de clapet 7 opposé à celui portant la tige de commande 3, porte une tige creuse 13. L'intérieur de cette tige 13 communique avec l'espace vide 10 situé entre les deux surfaces 6a, 7a en regard des deux éléments de clapet 6, 7 par des ouvertures 14.

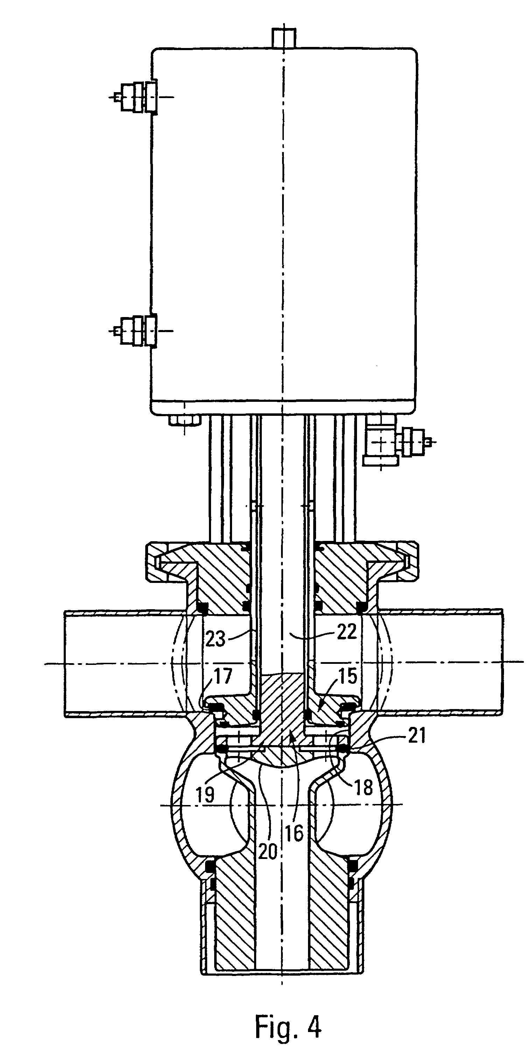

Dans la version représentée sur la figure 4, la vanne comporte deux clapets 15, 16. Le clapet 15 est de conception classique. Il comporte un joint 17 qui prend appui en position de fermeture sur le bord du siège cylindrique 18.

L'autre clapet 16 comprend deux éléments 19, 20 entre lesquels est monté avec serrage un joint 21. Le clapet 16 a une structure conforme à celle représentée sur les figures 1 à 3.

La tige de commande 22 du clapet 16 à deux éléments 19, 20, est montée de façon coulissante dans la tige de commande 23 du clapet 15.

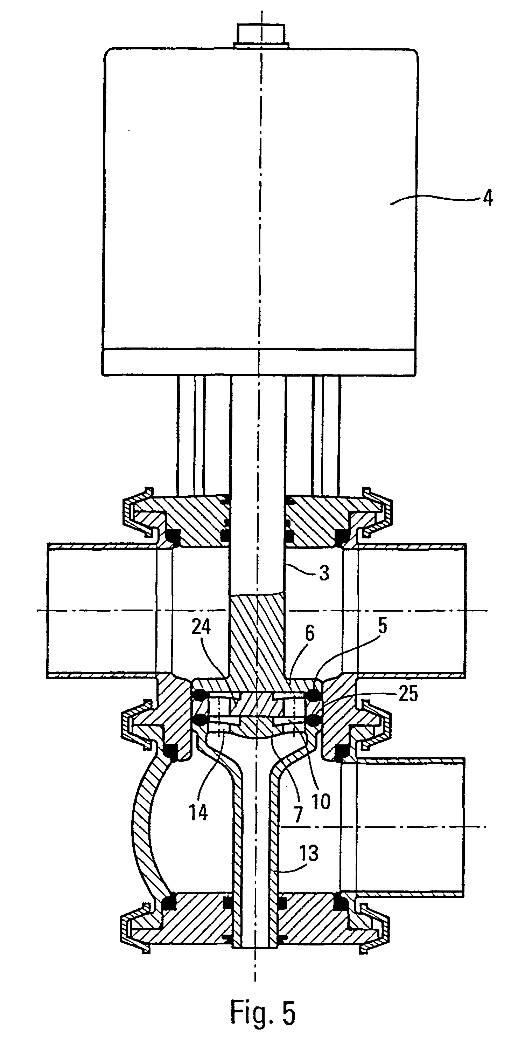

Dans la version représentée sur la figure 5, le deuxième élément de clapet 24 est un élément intermédiaire relié par vissage axial au premier élément de clapet 6. Cet élément intermédiaire 24 est relié par vissage axial à un troisième élément de clapet 7 comportant une gorge annulaire ouverte vers la gorge portée par l'élément intermédiaire 24.

Un joint torique 25 en élastomère est logé entre les deux gorges ci-dessus et serré entre celles-ci lors du vissage axial de l'élément intermédiaire 24 par rapport au troisième élément 7.

Dans cet exemple, le troisième élément 7 porte une tige creuse 13 dont l'intérieur communique avec l'espace vide 10 situé entre les deux surfaces en regard de l'élément intermédiaire 24 et du troisième élément 7.

De même, l'élément intermédiaire 24 comporte des ouvertures qui communiquent avec l'espace vide compris entre cet élément intermédiaire 24 et le premier élément de clapet 6.

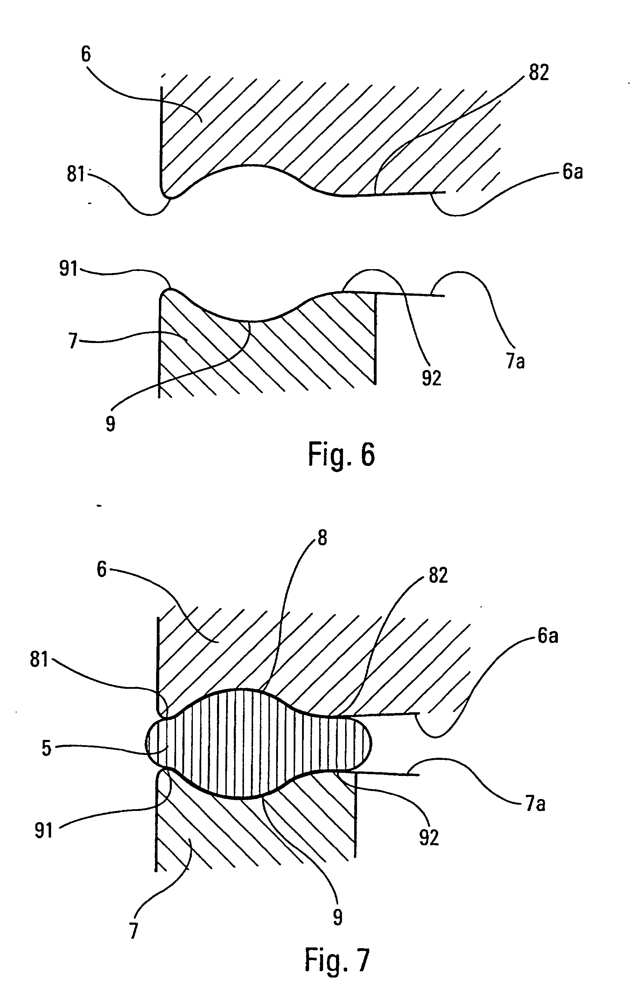

Dans le mode de réalisation des figures 6 et 7, chacun des bords de liaison 81, 82, 91, 92 entre chaque gorge annulaire 8, 9 et la surface 6a, 7a adjacente de l'élément de clapet 6, 7 correspondant a une forme sensiblement arrondie.

Comme représenté à la figure 7, dans la position écrasée du joint torique 5 après serrage des deux éléments de clapet 6, 7, le joint torique 5 épouse parfaitement les formes des gorges annulaires 8, 9 et des surfaces 6a, 7a, adjacentes sur une distance radiale nettement supérieure à la dimension radiale des gorges annulaires 8, 9, ce qui garantit une excellente étanchéité.

Les principaux avantages des vannes à clapet 1 que l'on vient de décrire sont les suivants :
1. Le premier avantage est le fait que lors de l'utilisation le produit véhiculé par la vanne ne peut pas se loger entre le clapet et le joint puisqu'il n'y a pas la place, il n'y a donc plus de risque d'infection bactérienne. Cet avantage résulte du fait que le joint est serré entre les gorges des deux éléments de clapet en remplissant complètement ces gorges.
2. Le deuxième avantage réside dans le fait que la partie centrale des demi-gorges n'est pas fermée et débouche vers l'extérieur de la vanne par le biais d'un canal spécialement aménagé : ainsi, si à la suite d'une surpression le produit véhiculé passait à travers la barrière d'étanchéité formé par le joint torique et les deux demi-gorges, le produit serait immédiatement évacué à l'extérieur et par conséquent il ne pourrait pas y avoir de développement bactérien à l'arrière du joint. Ce n'est pas le cas des vannes qui, actuellement, ne disposent pas de cette innovation.
3. Le troisième avantage réside dans le fait que le joint, une fois les deux demi-gorges serrées, n'est pas «enfermé» dans sa gorge et peut, de par son comportement viscoélastique, se déplacer légèrement vers l'intérieur du clapet lors de la manoeuvre de fermeture de la vanne, ainsi le frottement entre le joint et le corps de la vanne se trouve réduit. Les conséquences bénéfiques sont un effort de manoeuvre réduit et une plus grande durée de vie de l'étanchéité.
4. Le quatrième avantage est une conséquence du troisième. En effet, les vannes dans les industries agro-alimentaires et sanitaires fonctionnent couramment entre 1°C et 150°C. Les matériaux utilisés pour les joints toriques ont des coefficients de dilatation très supérieurs à ceux des matériaux métalliques des corps et clapets des vannes. Sans la possibilité de dilatation vers le centre du clapet offerte par cette innovation, la manoeuvre de la vanne devient difficile voire impossible à température élevée : le joint torique en se dilatant dans une gorge fermée va faire effet de coin et bloquer la vanne. De surcroît, quand la vanne a été manoeuvrée à plusieurs reprises à température élevée, l'usure prématurée de la partie frottante du joint torique va entraîner une fuite de la vanne à basse température par manque de compression du joint torique. L'innovation décrite, en évitant l'effet de coin précédemment décrit, assure un fonctionnement régulier et constant à travers une plage de température de 1°C à 150°C.

Bien entendu, l'invention n'est pas limitée à l'exemple que l'on vient de décrire et on peut apporter à celui-ci de nombreuses modifications sans sortir du cadre de l'invention.

## Revendications

1. Vanne à clapet comportant un clapet (1) en forme de piston mobile dans un siège cylindrique (2), ce clapet (1) étant solidaire d'une tige de commande (3) s'étendant dans l'axe (X-X') du siège cylindrique (2), le pourtour du clapet (1) portant un joint (5) en élastomère réalisant l'étanchéité entre ce clapet (1) et le siège cylindrique (2), **caractérisée en ce que** le clapet (1) comprend deux éléments de clapet (6, 7) fixés axialement l'un à l'autre par des moyens de serrage, chacun de ces deux éléments (6, 7) comportant une gorge annulaire (8, 9) de section sensiblement en forme d'arc de cercle ouverte vers la gorge portée par l'autre élément, le joint (5) torique en élastomère étant logé entre les deux gorges annulaires (8, 9) et serré entre celles-ci par lesdits moyens de serrage.

2. Vanne conforme à la revendication 1, **caractérisée en ce qu'**après montage du joint (5) et serrage des deux éléments de clapet (6, 7) l'un vers l'autre, il subsiste un espace (10) entre les deux surfaces (6a, 7a) en regard des deux éléments de clapet (6, 7) dans lequel le joint (5) peut se déformer.

3. Vanne conforme à l'une des revendications 1 ou 2, **caractérisée en ce que** les deux éléments de clapet (6, 7) sont fixés axialement l'un à l'autre par une tige filetée (11) portée par l'un (7) des éléments, vissée dans un taraudage (12) réalisé dans l'autre élément (6).

4. Vanne conforme à l'une des revendications 2 et 3, **caractérisée en ce que** les deux éléments de clapet (6, 7) sont suffisamment serrés l'un vers l'autre pour que le joint (5) se déforme pour faire saillie vers l'espace vide (10) et vers l'extérieur de la périphérie (6b, 7b) des deux éléments de clapet (6, 7) pour pouvoir s'appliquer de façon étanche contre le siège cylindrique (2).

5. Vanne conforme à l'une des revendications 1 à 4, **caractérisée en ce que** chacun des bords de liaison (81, 82, 91, 92) entre chaque gorge annulaire (8, 9) et la surface (6a, 7a) adjacente de l'élément de clapet (6, 7) correspondant a une forme sensiblement arrondie.

6. Vanne conforme à l'une des revendications 2 à 5, **caractérisée en ce que** l'élément de clapet (7) opposé à celui portant la tige de commande (3), porte une tige creuse (13) dont l'intérieur communique avec l'espace vide (10) situé entre les deux surfaces (6a, 7a) en regard des deux éléments de clapet (6, 7) par au moins une ouverture (14).

7. Vanne conforme à l'une des revendications 1 à 6, **caractérisée en ce qu'**elle comporte deux clapets (15, 16).

8. Vanne conforme à la revendication 7, **caractérisée en ce que** l'un (15) des clapets est de conception classique, tandis que l'autre (16) comprend deux éléments (19, 20) entre lesquels est monté avec serrage un joint (21) conformément à l'une des revendications 1 à 5, la tige de commande (22) du clapet (16) à deux éléments (19, 20) étant montée de façon coulissante dans la tige de commande (23) de l'autre clapet (15).

9. Vanne à clapet conforme à l'une des revendications 1 à 5, **caractérisée en ce que** le deuxième élément de clapet (24) est un élément intermédiaire relié par vissage axial au premier élément (6), cet élément intermédiaire (24) étant relié par vissage axial à un troisième élément de clapet (7) comportant une gorge annulaire ouverte vers la gorge portée par l'élément intermédiaire (24), un joint torique (25) en élastomère étant logé entre les deux gorges ci-dessus et serré entre celles-ci lors du vissage axial de l'élément intermédiaire (24) par rapport au troisième élément (7).

10. Vanne conforme à la revendication 9, **caractérisée en ce que** le troisième élément (7) porte une tige creuse (13) dont l'intérieur communique avec l'espace vice (10) situé entre les deux surfaces en regard de l'élément intermédiaire (24) et du troisième élément (7).

## Patentansprüche

1. Ventil mit Verschlusskörper bzw. Klappe, enthaltend einen Verschlusskörper bzw. Klappe (1) in Form eines beweglichen Kolbens in einem zylinderförmigen Sitz (2), wobei dieser Verschlusskörper (1) aus einem Stück mit einer Steuerstange (3) ist, die sich in die Achse (X-X') des zylinderförmigen Sitzes (2) erstreckt, wobei der äußere Umfang des Verschlusskörpers (1) ein Dichtungsmittel (5) aus Elastomer trägt, das die Dichtigkeit zwischen diesem Verschlusskörper (1) und dem zylinderförmigen Sitz (2) verwirklicht, **dadurch gekennzeichnet, dass** der Verschlusskörper (1) zwei Verschlusskörperelemente (6, 7) umfasst, die durch Pressmittel axial aneinander befestigt sind, wobei jedes dieser zwei Elemente (6, 7) eine ringförmige Vertiefung (8, 9) mit einem Abschnitt enthält, der im wesentlichen in Form eines Kreisbogens ist, der gegen die Vertiefung offen ist, die von dem anderen Element getragen wird, wobei das wulstförmige Dichtungsmittel (5) aus Elastomer zwischen den zwei ringförmigen Vertiefungen (8, 9) gelagert ist und zwischen diese durch die Pressmittel gepresst ist.

2. Ventil gemäß Anspruch 1, **dadurch gekennzeichnet, dass** nach Einbau des Dichtungsmittels (5) und Pressung der zwei Verschlusskörperelemente (6, 7) eines gegen das andere zwischen den zwei Oberflächen (6a, 7a) im Hinblick auf die zwei Verschlusskörperelemente (6, 7) ein Raum (10) vorhanden ist, in dem sich das Dichtungsmittel (5) verformen kann.

3. Ventil gemäß einem der Ansprüche 1 oder 2, **dadurch gekennzeichnet, dass** die zwei Verschlusskörperelemente (6, 7) durch eine Gewindestange (11) axial aneinander befestigt sind, die von einem (7) der Elemente getragen wird, die in ein Innengewinde (12) geschraubt ist, das in dem anderen Element (6) verwirklicht ist.

4. Ventil gemäß einem der Ansprüche 2 oder 3, **dadurch gekennzeichnet, dass** die zwei Verschlusskörperelemente (6, 7) ausreichend gegeneinander gepresst sind, sodass sich das Dichtungsmittel (5) verformt, um zu dem leeren Raum (10) und zu der Außenseite der Dichtungsmittel (5) verformt, um zu dem leeren Raum (10) und zu der Außenseite der Peripherie (6b, 7b) der zwei Verschlusskörperelemente (6, 7) hervorzuspringen, um sich in dichter Weise gegen den zylinderförmigen Sitz (2) ansetzen zu können.

5. Ventil gemäß einem der Ansprüche 1 bis 4, **dadurch gekennzeichnet, dass** jeder der Verbindungsränder (81, 82, 91, 92) zwischen jeder ringförmigen Vertiefung (8, 9) und der Oberfläche (6a, 7a), benachbart zu dem entsprechenden Verschlusskörperelement (6, 7), einer im wesentlichen runden Form aufweist.

6. Ventil gemäß einem der Ansprüche 2 bis 5, **dadurch gekennzeichnet, dass** das Verschlusskörperelement (7), das dem gegenüberliegt, das die Steuerstange (3) trägt, eine hohle Stange (13) trägt, deren Inneres durch mindestens eine Öffnung (14) mit dem leeren Raum (10) in Verbindung steht, der zwischen den zwei Oberflächen (6a, 7a) im Hinblick auf die zwei Verschlusskörperelemente (6, 7) angeordnet ist.

7. Ventil gemäß einem der Anspruche 1 bis 6, **dadurch gekennzeichnet, dass** es zwei Verschlusskörper bzw. Klappen (15, 16) enthält.

8. Ventil gemäß Anspruch 7, **dadurch gekennzeichnet, dass** einer (15) der Verschlusskörper von klassischer Bauart ist, während der andere (16) zwei Elemente (19, 20) umfasst, zwischen denen mit Pressung ein Dichtungsmittel (21) gemäß einem der Ansprüche 1 bis 5 montiert ist, wobei die Steuerstange (22) des Verschlusskörpers (16) mit zwei Elementen (19, 20) in der Steuerstange (23) des anderen Verschlusskörpers (15) auf eine verschiebbare Weise montiert ist.

9. Ventil mit Verschlusskörper gemäß einem der Ansprüche 1 bis 5, **dadurch gekennzeichnet, dass** das zweite Verschlusskörperelement (24) ein Zwischenelement ist, das durch axiale Verschraubung mit dem ersten Element (6) verbunden ist, wobei dieses Zwischenelement (24) durch axiale Verschraubung mit einem dritten Verschlusskörperelement (7) verbunden ist, das eine ringförmige Vertiefung enthält, die zu der Vertiefung offen ist, die von dem Zwischenelement (24) getragen wird, wobei ein wulstförmiges Dichtungsmittel (25) aus Elastomer zwischen den zwei vorstehenden Vertiefungen gelagert und zwischen diese infolge der axialen Verschraubung des Zwischenelements (24) in Bezug auf das dritte Element (7) gepresst ist.

10. Ventil gemäß Anspruch 9, **dadurch gekennzeichnet, dass** das dritte Element (7) eine hohle Stange (13) trägt, deren Inneres in Verbindung mit dem leeren Raum (10) steht, der zwischen den zwei Oberflächen in Bezug auf das Zwischenelement (24) und das dritte Element (7) angeordnet ist.

## Claims

1. A valve gate comprising a valve (1) in the form of a piston which is movable in a cylindrical seat (2), this valve (1) being integral with a control rod (3) extending along the axis (X-X') of the cylindrical seat (2) and the valve (1) bearing on its outside edge a joint (5) made of elastomer which achieves tightness between said valve (1) and cylindrical seat (2), **characterized in that** the valve (1) comprises two valve elements (6, 7) fixed axially to one another by clamping means, each of these two elements (6, 7) having an annular groove (8, 9) which is substantially circular-arc-shaped in cross section and is open towards the groove made in the other element, the toric joint (5) made of elastomer being disposed between the two annular grooves (8, 9) and gripped between said annular grooves (8, 9) by said clamping means.

2. A gate according to Claim 1, **characterized in that,** after fitting the joint (5) and pressing the two valve elements (6, 7) towards one another, a space (10) remains between the two opposed surfaces (6a, 7a) of the two valve elements (6, 7) for accommodating any deformation of the joint (5).

3. A gate according to one of Claims 1 or 2, **characterized in that** the two valve elements (6, 7) are fixed axially to one another by way of a threaded rod (11) which is carried by one (7) of the elements and is screwed into a threaded hole (12) made in the other element (6).

4. A gate according to one of Claims 2 or 3, **characterized in that** the two valve elements (6, 7) are pressed together so tightly that the joint (5) is deformed in such a way as to extend towards the empty space (10) and towards the outside edge (6b, 7b) of the two valve elements (6, 7) and press tightly against the cylindrical seat (2).

5. A gate according to one of Claims 1 to 4, **characterized in that** each of the edges (81, 82, 91, 92) linking each annular groove (8, 9) with the adjacent surface (6a, 7a) of the corresponding valve element (6, 7) has a shape which is substantially rounded off.

6. A gate according to one of Claims 2 to 5, **characterized in that** the valve element (7), opposite the one bearing the control rod (3), bears a hollow rod (13), the interior of which communicates with the empty space (10) located between the two opposed surfaces (6a, 7a) of the two valve elements (6, 7) through at least one opening (14).

7. A gate according to one of Claims 1 to 6, **characterized in that** it has two valves (15, 16).

8. A gate according to Claim 7, **characterized in that** one (15) of the valves is of standard design, whilst the other (16) comprises two elements (19, 20) between which a joint (21) is clamped according to one of Claims 1 to 5, the control rod (22) of the valve (16), comprising the two elements (19, 20), being disposed so as to slide in the control rod (23) of the other valve (15).

9. A valve gate according to one of Claims 1 to 5, **characterized in that** the second valve element (24) is an intermediate element linked by axial screw connection to the first element (6), this intermediate element (24) being linked by axial screw connection to a third valve element (7) having an annular groove which is open towards the groove made in the intermediate element (24), a toric joint (25) made of elastomer being disposed between the above two grooves and clamped between said grooves when the intermediate element (24) and the third element (7) are axially screwed together.

10. A gate according to Claim 9, **characterized in that** the third element (7) bears a hollow rod (13), the interior of which communicates with the empty space (10) located between the two opposed surfaces of the intermediate element (24) and the third element (7).
